# EUROPÄISCHE PATENTSCHRIFT

(11) **EP 2 886 283 B1**
(45) Veröffentlichungstag und Bekanntmachung des Hinweises auf die Patenterteilung: **12.10.2016**
(21) Anmeldenummer: 14194875.2
(22) Anmeldetag: 26.11.2014
(51) Int. Cl.: B29C 37/00, B29C 45/42, B29C 45/14

(54) **Vorrichtung zur Herstellung von Kunststoffteilen mit Einlegeteilen in einem Spritzgießverfahren**
Device for the production of plastics parts with inserts in an injection molding method
Dispositif de fabrication de pièces en matière plastique ayant des inserts dans un procédé de moulage par injection

(30) Priorität: 20.12.2013 DE 102013021717
(43) Veröffentlichungstag der Anmeldung: 24.06.2015
(73) Patentinhaber: Gerresheimer Regensburg GmbH, 93047 Regensburg (DE)
(72) Erfinder: Eichstätter, Markus, 92533 Wernberg-Köblitz (DE)
(74) Vertreter: Hannke, Christian

(56) Entgegenhaltungen:
- EP-A1- 0 712 709
- EP-A1- 0 780 208
- EP-A1- 1 790 453
- DE-A1- 2 428 496
- DE-A1- 19 803 171
- DE-A1- 19 854 663
- JP-A- H06 328 502
- JP-A- H07 186 170
- US-A- 3 358 689
- US-A1- 2004 084 809

## Beschreibung

Die Erfindung betrifft eine Vorrichtung zur Herstellung von Kunststoffteilen mit Einlegeteilen in einem Spritzgießverfahren.

Bei der Herstellung von Kunststoffteilen mit Einlegeteilen mittels Spritzgießverfahren, wobei die Einlegeteile beispielsweise aus Metall, Glas, Keramik, Kunststoff oder dergleichen hergestellt sind, ist zum Einlegen der Einlegeteile ein Einlegevorgang in ein entsprechendes Spritzgußwerkzeug mit derartigen Einlegeteilen notwendig. Nach Abschluss des Spritzgießvorgangs müssen die mit Kunststoff umspritzten Einlegeteile und somit die Kunststoffteile mit den nunmehr fest damit verbundenen Einlegeteilen aus dem Spritzgußwerkzeug entnommen werden.

Ein beispielhaftes Anwendungsgebiet stellt die Herstellung von Lanzetten für medizinische Stechhilfen dar. Hier wird eine Nadel, welche in der Regel aus Metall besteht, in eine Kavität eines Spritzgußwerkzeuges eingelegt. Anschließend wird diese Nadel teilweise mit einem Kunststoffkörper umspritzt. Als Einlegeteile können allerdings auch Kanülen und Septa oder dergleichen verwendet werden.

In der Regel werden die Einlegeteile in eine untere Werkzeughälfte einer vertikalen Werkzeuganordnung eingelegt. Es ist jedoch durchaus auch denkbar, die Einlegeteile in einer horizontalen Werkzeuganordnung in einer Kavität einer Werkzeughälfte zu fixieren.

Nach dem Umspritzen des Einlegeteils muss das fertige Erzeugnis, nämlich das Kunststoffteil mit dem Einlegeteil, durch eine Entnahmevorrichtung aus dem Spritzgußwerkzeug entnommen werden.

Die meisten Spritzgußerzeugnisse werden mit einem schieber-/stiftartigen Auswerfer aus der entsprechenden Werkzeughälfte entfernt. Der Auswerfer dringt hierzu werkzeugseitig in die Kavität ein und erzwingt das Auswerfen des Erzeugnisses. Der resultierende Fall der Erzeugnisse muss aufgefangen werden, da ein zu hoher Fall die Erzeugnisse beschädigen könnte, was insbesondere bei einer horizontalen Werkzeuganordnung der Fall ist, oder das Erzeugnis auf die gegenüberliegende Werkzeughälfte fallen würde, was insbesondere bei einer vertikalen Werkzeuganordnung der Fall wäre. Zur Entnahme fährt eine entsprechende Entnahmevorrichtung zwischen die beiden Werkzeughälften oder unter die Auswerferseite des Werkzeuges.

JP H06 328 502 zeigt eine Vorrichtung zur Herstellung von Kunststoffteilen mit Einlegeteilen in einem Spritzgießverfahren, wobei eine erste Werkzeughälfte und eine zweite Werkzeughälfte sowie eine Beförderungseinrichtung vorgesehen sind.

Bei einer anderen Anordnung, insbesondere bei vertikal angeordneten Werkzeugen, bei welchen das Erzeugnis nach dem Öffnen der Werkzeughälften in der unteren Werkzeughälfte verbleibt, muss das Erzeugnis durch Greifer entnommen werden, da ein schwerkraftbegünstigtes Auswerfen ausscheidet. Dabei kann der Verbleib des Erzeugnisses in den vertikal angeordneten Werkzeughälften durch bestimmte Methoden gezielt gesteuert werden. Hierzu zählt z. B. die Anordnung der Angusskanäle, so dass der Erzeugnisverbleib in der oberen Werkzeughälfte erfolgt, wenn die Angusskanäle ebenfalls in der oberen Werkzeughälfte angeordnet sind. Andererseits verbleiben die Erzeugnisse in der unteren Werkzeughälfte, wenn die Angusskanäle ebenfalls in der unteren Werkzeughälfte angeordnet sind.

Bei allen gängigen Methoden werden bislang zwei separate Vorrichtungen - eine zum Einlegen der Einlegeteile und eine zum Entnehmen der fertigen Kunststoffteile, nämlich der Kunststoffteile mit den Einlegeteilen - benötigt. In der Folge ist der Ablauf der Bestückung und der Entnahme meist sequentiell und damit produktionstechnisch sehr ineffizient. Es ist daher Aufgabe der Erfindung, eine Vorrichtung der eingangs genannten Art derart weiter zu verbessern, dass die Produktion sehr effizient erfolgt, wobei eine parallele Entnahme der fertigen Erzeugnisse, nämlich der Kunststoffteile mit Einlegeteilen, und ein Bestücken des Spritzgußwerkzeuges mit Einlegeteilen zum Umspritzen mit Kunststoff möglich sein soll.

Gelöst wird diese Aufgabe durch eine Vorrichtung mit allen Merkmalen des Patentanspruchs 1. Vorteilhafte Ausgestaltungen der Erfindung finden sich in den Unteransprüchen.

Bei der erfindungsgemäßen Vorrichtung zur Herstellung von Kunststoffteilen mit Einlegeteilen in einem Spritzgießverfahren sind eine erste Werkzeughälfte und eine zweite Werkzeughälfte sowie eine Beförderungseinrichtung vorgesehen. Die Vorrichtung zeichnet sich dahingehend aus, dass die Beförderungseinrichtung (5) wenigstens ein Ablageelement (6) zur Ablage eines Einlegeteils (2) in der ersten Werkzeughälfte (3) und wenigstens ein Entnahmeelement (7) zur Entnahme eines fertigen Kunststoffteils (1) mit Einlegeteil (2) aus der zweiten Werkzeughälfte (4) aufweist, wobei durch die Beförderungseinrichtung (5) eine Entladeposition einnehmbar ist, in welcher in einem Beförderungsschritt durch das wenigstens eine Ablageelement (6) ein Einlegeteil (2) in der ersten Werkzeughälfte (3) zum Umspritzen mit Kunststoff ablegbar ist und parallel dazu durch das wenigstens eine Entnahmeelement (7) wenigstens ein fertiges Kunststoffteil (1) mit Einlegeteilen (2) aus der zweiten Werkzeughälfte (4) entnehmbar ist..

Durch die erfindungsgemäße Ausgestaltung ist es nunmehr möglich, die Bestückung eines Spritzgußwerkzeuges mit Einlegeteilen zum Umspritzen mit Kunststoff und die Entnahme von fertigen Erzeugnissen, nämlich Kunststoffteilen mit Einlegeteilen nicht mehr sequentiell nacheinander durchzuführen, sondern parallel zueinander. Hierdurch ist es möglich, produktionstechnisch sehr effizient zu arbeiten, da fertige Endprodukte, nämlich Kunststoffteile mit Einlegeteilen, bereits aus der erfindungsgemäßen Vorrichtung entnommen werden können, während gleichzeitig bereits neue Einlegeteile zum Umspritzen mit Kunststoff in das Werkzeug eingebracht werden. Zudem ist hierzu nur eine gemeinsame Einrichtung zum Bestücken der Vorrichtung mit neuen, mit Kunststoff zu umspritzenden Einlegeteilen und zur Entnahme von bereits fertigen Erzeugnissen, nämlich Kunststoffteilen mit Einlegeteilen, notwendig. Hierdurch ist sowohl der Vorrichtungsaufwand als auch der zeitliche Aufwand und somit der gesamte Herstellungsaufwand für Kunststoffteile mit Einlegeteilen optimiert.

Die Erfindung weist dabei die Beförderungseinrichtung wenigstens ein Ablageelement zur Ablage eines Einlegeteils in der ersten Werkzeughälfte und wenigstens ein Entnahmeelement zur Entnahme eines Endprodukts, nämlich eines fertigen Kunststoffteils mit Einlegeteil, aus der zweiten Werkzeughälfte, auf. Hierdurch ist in einfacher Weise gewährleistet, dass die Beförderungseinrichtung die separaten Aufgaben, nämlich das Bestücken der ersten Werkzeughälfte mit neuen, mit Kunststoff zu umspritzenden Einlegeteilen und die Entnahme fertiger Endprodukte, nämlich Kunststoffteile mit Einlegeteilen, aus der zweiten Werkzeughälfte, parallel durchführen kann. Dabei ist es nicht notwendig, mit dem einen Arbeitsvorgang solange zu warten, bis der andere Arbeitsvorgang abgeschlossen ist.

Dabei hat es sich als besonders vorteilhaft erwiesen, dass das wenigstens eine Ablageelement zur Ablage eines Einlegeteils in der Werkzeughälfte als Greifelement vorzugsweise als Vakuumgreifelement ausgebildet ist. Mit derartigen Greifelementen ist es in einfacher Weise möglich, die zu umspritzenden Einlegeteile zu greifen und in dem Spritzgußwerkzeug entsprechend zu positionieren. Die Verwendung von Vakuumgreifelementen hat sich insbesondere dann als vorteilhaft erwiesen, wenn die Einlegeteile in der unteren Werkzeughälfte abgelegt werden sollen, da zur Ablage der Einlegeteile in einer Kavität der unteren Werkzeughälfte nur das Vakuum, welches das Einlegeteil in dem Vakuumgreifelement hält, entsprechend reduziert wird. Aufgrund seines Gewichtes und der Schwerkraft fällt dabei das Einlegeteil in die entsprechende Kavität, wenn das Vakuumgreifelement darüber positioniert ist, ohne dass separate Arbeits- beziehungsweise Verfahrensschritte notwendig sind.

Natürlich ist es auch denkbar, dass das Ablageelement zur Ablage eines Einlegeteils in der ersten Werkzeughälfte als mechanisches Greifelement ein entsprechendes Einlegeteil greift und in der ersten Werkzeughälfte beziehungsweise einer dortigen Kavität positioniert.

Das Entnahmeelement zur Entnahme eines fertigen Kunststoffteils mit Einlegeteil aus der zweiten Werkzeughälfte ist dabei ebenfalls vorzugsweise als Greifelement ausgebildet. Auch hierbei kann vorgesehen sein, dass das Greifelement als mechanisches Greifelement oder auch Vakuumgreifelement die fertigen Kunststoffteile mit Einlegeteil direkt aus der zweiten Werkzeughälfte entnimmt.

Allerdings ist es auch möglich, das wenigstens eine Entnahmeelement zur Entnahme eines fertigen Kunststoffteils mit Einlegeteil aus der zweiten Werkzeughälfte als Auffangbehälter auszubilden. Dabei werden zum Auswerfen der Endprodukte aus der zweiten Werkzeughälfte beispielsweise die eingangs beschriebenen schieber-/stiftartigen Auswerfer benutzt. Dies bietet sich insbesondere dann an, wenn die Werkzeughälften vertikal zueinander arbeiten und fertige Erzeugnisse, nämlich Kunststoffteile mit Einlegeteilen, aufgrund ihrer Schwerkraft in das darunterliegende als Aufnahmebehälter ausgebildete Entnahmeelement fallen können.

Nach einer weiteren vorteilhaften Ausgestaltung der Erfindung hat es sich als besonders vorteilhaft erwiesen, wenn durch die Beförderungseinrichtung eine Ladeposition einnehmbar ist, in welcher das wenigstens eine Ablageelement ein Einlegeteil aus einem Magazin mit einer Mehrzahl von Einlegeteilen entnimmt und das wenigstens eine Entnahmeelement wenigstens ein fertiges Kunststoffteil mit Einlegeteil in einem Behältnis ablegt. Auch hierdurch ist es ermöglicht, dass diese beiden Schritte zur Entnahme eines neuen zu umspritzenden Einlegeteils und Ablage von fertigen Erzeugnissen, nämlich eines Kunststoffteils mit Einlegeteilen, parallel und im Wesentlichen zeitgleich durch die Beförderungseinrichtung durchgeführt werden können. Es sind somit keine weiteren Vorrichtungen notwendig, um diese Schritte durchzuführen. Ebenfalls wird hierdurch der Produktionsprozess weiter optimiert, da unterschiedliche Verfahrensschritte nunmehr parallel und zeitgleich durchführbar sind.

Erfindungsgemäß ist durch die Beförderungseinrichtung eine Entladeposition einnehmbar, in welcher das wenigstens eine Ablageelement ein Einlegeteil der ersten Werkzeughälfte zum Umspritzen mit Kunststoff ablegt, und das wenigstens eine Entnahmeelement wenigstens ein fertiges Kunststoffteil mit Einlegeteilen aus der zweiten Werkzeughälfte entnimmt.

Vorteilhafterweise ist dabei die Beförderungseinrichtung derart ausgebildet, dass sie zwischen der Ladeposition und der Entladeposition in einfacher Art und Weise beispielsweise auf einem Schienensystem hin und her verfahrbar ist.

Nach einem weiteren Gedanken der Erfindung weist die erste Werkzeughälfte eine Ablagegeometrie auf, welche ein darin abgelegtes Einlegeteil selbsttätig in eine Bearbeitungsposition überführt. Eine derartige Ablagegeometrie kann beispielsweise durch schräge beziehungsweise keilförmige Flächen ausgebildet sein, auf denen ein in der ersten Werkzeughälfte abgelegtes Einlegeteil selbsttätig aufgrund seines Gewichtes und seiner Schwerkraft in eine Bearbeitungsposition überführt wird.

Nach einem weiteren Gedanken der Erfindung wird der Auffangbehälter beim Einfahren der Beförderungseinrichtung in die Ladeposition durch eine Kippgeometrie selbstständig gekippt, sodass die darin enthaltenen fertigen Erzeugnisse, nämlich Kunststoffteile mit Einlegeteilen in ein Sammelbehältnis auskippbar und dort sammelbar sind.

Weitere Ziele, Vorteile, Merkmale und Anwendungsmöglichkeiten der vorliegenden Erfindung ergeben sich aus der nachfolgenden Beschreibung von Ausführungsbeispielen anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1:: ein Ausführungsbeispiel einer erfindungsgemäßen Vorrichtung mit einer Beförderungseinrichtung in einer Entladeposition vor dem Ablegen eines Einlegeteils,
- Figur 2:: eine Detaildarstellung eines Ablageelementes in der Entladeposition der Beförderungseinrichtung gemäß der Darstellung der Figur 1,
- Figur 3:: die Vorrichtung gemäß Figur 1 mit einer Beförderungseinrichtung in einer Entladeposition nach dem Ablegen eines Einlegeteils,
- Figur 4:: eine Detaildarstellung eines Ablageelementes in der Entladeposition der Beförderungseinrichtung gemäß der Darstellung der Figur 3,
- Figur 5:: die Vorrichtung gemäß Figur 1 mit einer Beförderungseinrichtung in einer Ladeposition vor dem Aufnehmen eines Einlegeteils,
- Figur 6:: die Vorrichtung gemäß Figur 1 mit einer Beförderungseinrichtung in einer Ladeposition während dem Aufnehmen eines Einlegeteils in einer Ansicht von vorne,
- Figur 7:: eine Detaildarstellung eines Ablageelementes in der Ladeposition der Beförderungseinrichtung gemäß der Darstellung der Figur 6,
- Figur 8:: die Vorrichtung gemäß Figur 1 mit einer Beförderungseinrichtung in einer Ladeposition während dem Aufnehmen eines Einlegeteils in einer Ansicht von hinten,
- Figur 9:: eine Detaildarstellung eines Ablageelementes in der Ladeposition der Beförderungseinrichtung gemäß der Darstellung der Figur 6 nach dem Aufnehmen eines Einlegeteils,
- Figur 10:: die Beförderungseinrichtung der erfindungsgemäßen Vorrichtung der Figuren 1 bis 9 in einer Detaildarstellung und
- Figur 11:: Detaildarstellung eines Ablageelementes der erfindungsgemäßen Vorrichtung der Figuren 1 bis 9.

In den Figuren ist ein Ausführungsbeispiel einer erfindungsgemäßen Vorrichtung zur Herstellung von Kunststoffteilen mit Einlegeteilen in einem Spritzgießverfahren gezeigt.

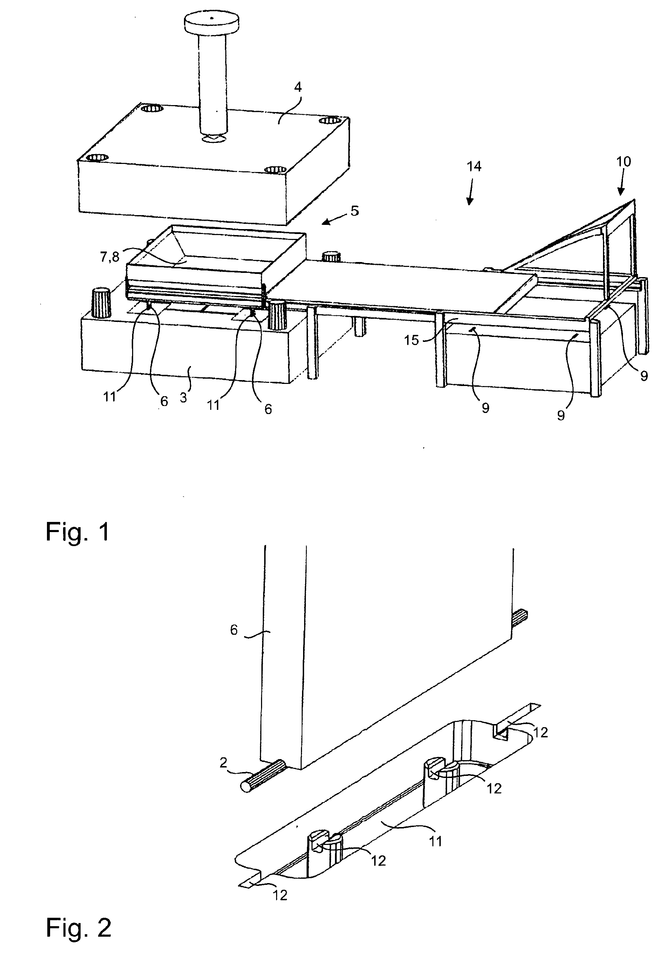

Aus Figur 1 ist dabei der strukturelle Aufbau dieses Ausführungsbeispiels der Vorrichtung dargestellt. Die Vorrichtung weist ein Spritzgußwerkzeug mit einer ersten Werkzeughälfte 3 und einer zweiten Werkzeughälfte 4 auf. Die Werkzeughälfte 3 ist in diesem Ausführungsbeispiel unten angeordnet, während die Werkzeughälfte 4 oben angeordnet ist. Die erste Werkzeughälfte 3 ist ortsfest an einem Boden angeordnet, während die zweite Werkzeughälfte 4 gegenüber der ersten Werkzeughälfte 3 vertikal verfahrbar ist. Die Darstellung der Figur 1 zeigt das Spritzgußwerkzeug in einer offenen Position, in welcher eine Beförderungseinrichtung 5 zwischen die erste Werkzeughälfte 3 und die zweite Werkzeughälfte 4 eingefahren ist. Die Beförderungseinrichtung 5 ist dabei auf einem Gestell 15 angeordnet, auf welchem es mittels eines Schienensystems 14 zwischen die beiden Werkzeughälften 3 und 4 hinein und heraus verfahrbar ist.

Die Beförderungseinrichtung 5 weist zu der zweiten Werkzeughälfte 4 hinweisend ein Entnahmeelement 7 zur Entnahme eines fertigen Kunststoffteils 2 mit Einlegeteil 1 aus der zweiten Werkzeughälfte 4 auf. Im vorliegenden Ausführungsbeispiel ist das Entnahmeelement 7 als Auffangbehälter 8 ausgebildet. Schieber-/stiftartige Auswerfer, die die fertigen Kunststoffteile 2 mit Einlegeteil 1 aus der zweiten Werkzeughälfte auswerfen, sind in den Figuren nicht dargestellt.

Zur Werkzeughälfte 3 hinweisend weist die Beförderungseinrichtung 5 in diesem Ausführungsbeispiel vier Ablageelemente 6 jeweils zur Ablage eines Einlegeteils 2 in eine entsprechende Kavität 11 der ersten Werkzeughälfte 3 auf, wobei die Kavitäten 11 während des Spritzgießens mit Kunststoff gefüllt werden, sodass das Kunststoffteil 1 mit Einlegeteil 2 entsteht. Die vier Ablageelemente 6 sind vorliegend als Greifelemente in Form von Vakuumgreifelementen ausgebildet.

Die Figur 1 zeigt nunmehr die Beförderungseinrichtung 5 im eingefahrenen Zustand in einer Entladeposition zwischen den beiden Werkzeughälften 3 und 4. Die zu der Werkzeughälfte 3 hinweisenden Ablageelemente 6 sind dabei jeweils mit einem Einlegeteil 2 bestückt, wie es insbesondere der Detaildarstellung der Figur 2 zu entnehmen ist. Die Einlegeteile 2, welche in diesem Ausführungsbeispiel als Nadeln, beispielsweise für herzustellende Lanzetten ausgebildet sind, werden mittels Vakuum in den Ablageelementen 6 gehalten.

In der Werkzeughälfte 4, welche hier in den Figuren nicht dargestellte Angusskanäle für den Kunststoff enthält, sind bereits vier fertige Endprodukte, nämlich Kunststoffteile 1 mit Einlegeteilen 2 angeordnet, die mit entsprechenden, hier nicht dargestellten schieber-/stiftartigen Auswerfern, von der Werkzeugoberseite 4 gelöst werden und nachfolgend durch die Schwerkraft in den Auffangbehälter 8 fallen.

In der Figur 2 ist deutlich eine der Kavitäten 11 zu erkennen, in welche das Einlegeteil 2 in Form einer Nadel zur Umspritzung mit Kunststoff eingelegt werden soll. Deutlich ist dabei auch eine Ablagegeometrie 12 zu erkennen, in welche das Einlegeteil abgelegt wird. Dabei kann das Einlegeteil 2 entsprechende, hier nicht näher dargestellte Flächen aufweisen, mittels welcher das Einlegeteil zwangsgeführt in seine Endposition in die Kavität überführbar ist.

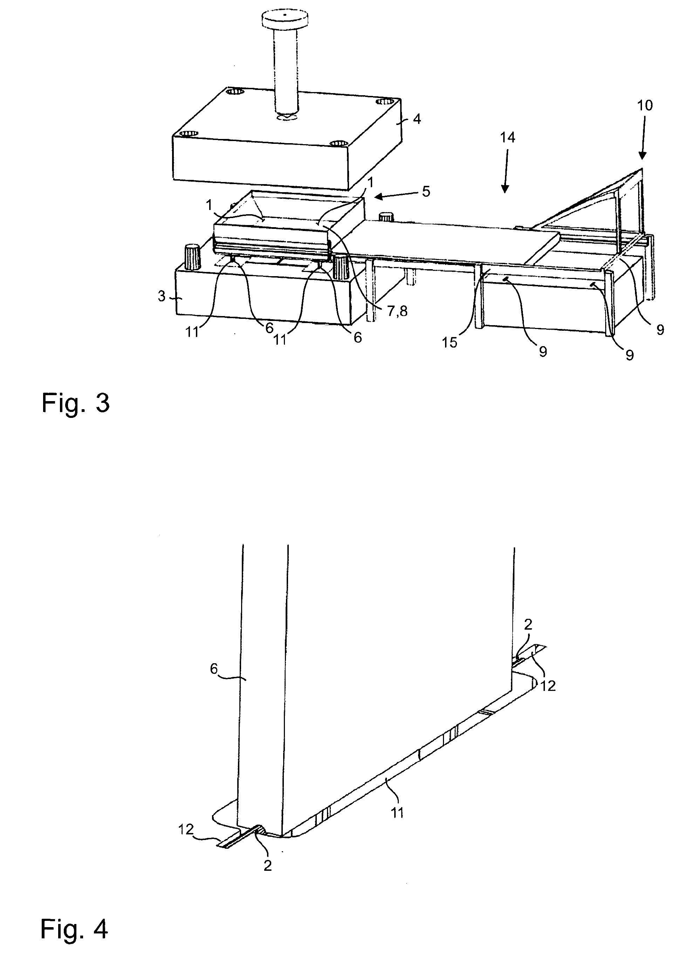

In der Darstellung gemäß Figur 3 sind die bereits hergestellten Endprodukte in Form eines Kunststoffteils 1 mit einem Einlegeteil 2 bereits von der zweiten Werkzeughälfte 4 gelöst und in den Auffangbehälter 8 gefallen. Wie insbesondere der Figur 4 zu entnehmen ist, sind die Ablageelemente 6 mittlerweile in Richtung der Kavitäten 11 verfahren, so dass die Einlegeteile in der Ablagegeometrie 12 eingelegt sind. In dieser Position kann das Vakuum der Eingriffelemente 6 reduziert oder aufgehoben werden, so dass die Ablageelemente 6 wieder in Richtung der Beförderungseinrichtung verfahrbar sind, ohne dass sie die Einlegeteile 2 wieder aus den Kavitäten 11 entnehmen.

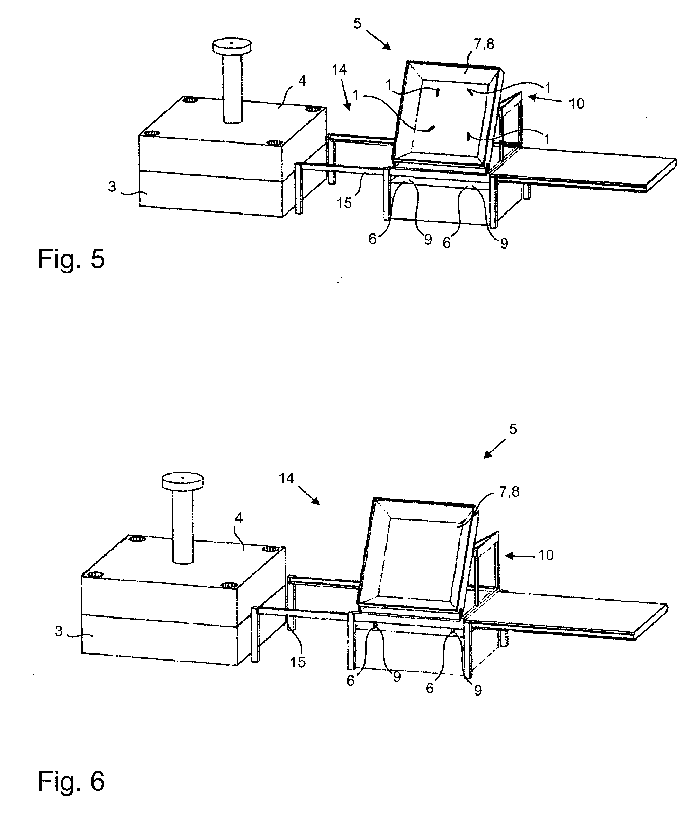

In der Figur 5 ist nunmehr die zweite Werkzeughälfte 4 in Richtung der Werkzeughälfte 3 verfahren, so dass das Spritzgußwerkzeug geschlossen ist. Die Beförderungseinrichtung 5 wurde dabei aus der Entladeposition in eine Ladeposition verfahren, in welcher die Ablageelemente 6 mit neuen Einlegeteilen 2 bestückt werden können, während die in den Kavitäten 11 der unteren Werkzeughälften 3 abgelegten Einlegeteile 2 im Spritzgußwerkzeug mit Kunststoff zu den fertigen Kunststoffteilen 1 mit Einlegeteilen 2 umspritzt werden. Deutlich ist der Figur 5 ebenso wie der Figur 6 eine Kippgeometrie 10 zu entnehmen, welche auf dem Gestell 15 angeordnet ist und welche den Auffangbehälter 8 beim Verfahren der Beförderungseinrichtung in die Ladeposition kippt, so dass die darin enthaltenen Endprodukte, nämlich Kunststoffteile 1 mit Einlageteilen 2, daraus herausfallen und in einer hier nicht dargestellten Sammeleinrichtung gesammelt werden.

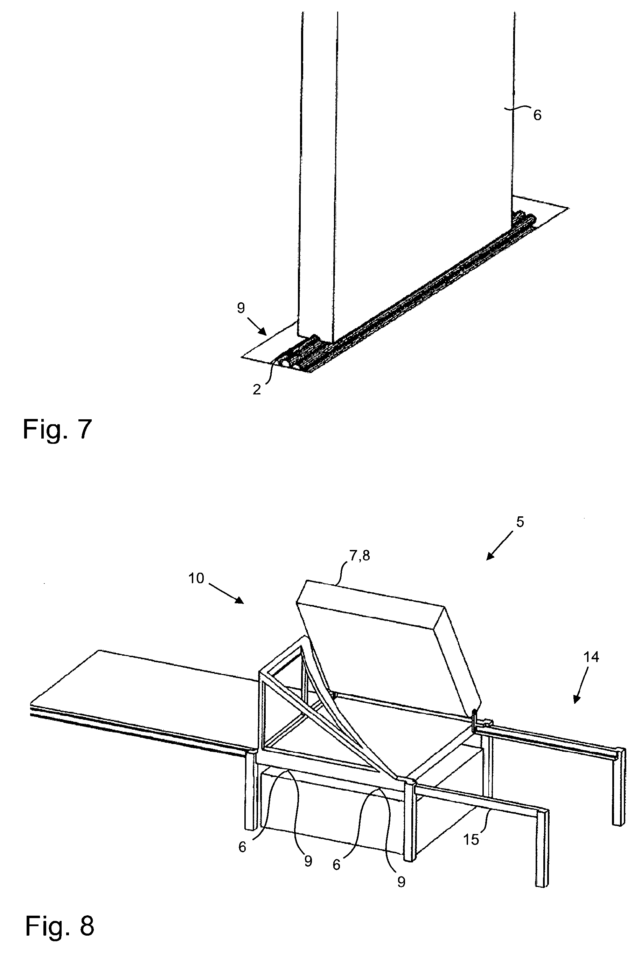

Figur 8 zeigt die Darstellung der erfindungsgemäßen Vorrichtung im Bereich der Beförderungseinrichtung 5 in ihrer Ladeposition in einer Ansicht von hinten. Deutlich zu erkennen ist hierbei die keilförmig ausgebildete Kippgeometrie 10 für den Auffangbehälter 8.

In der Figur 5 sind die Ablageelemente 6 der Beförderungseinrichtung 5 in einer Position dargestellt, in welcher sie noch nicht mit Einlegeteilen 2 bestückt sind, wobei sie aber schon über Magazinen 9 positioniert sind, aus welchen sie Einlageteile 2 entnehmen können. In Figur 6 sind die Ablageelemente 6 nunmehr bereits in die Magazine 9 abgesenkt, so dass sie Einlageteile 2 aufnehmen können, indem sie mit Vakuum beaufschlagt werden. Eine Detaildarstellung eines Ablageelementes 6 während der Aufnahme eines Einlageteils 2 aus einem Magazin 9 ist in Figur 7 dargestellt.

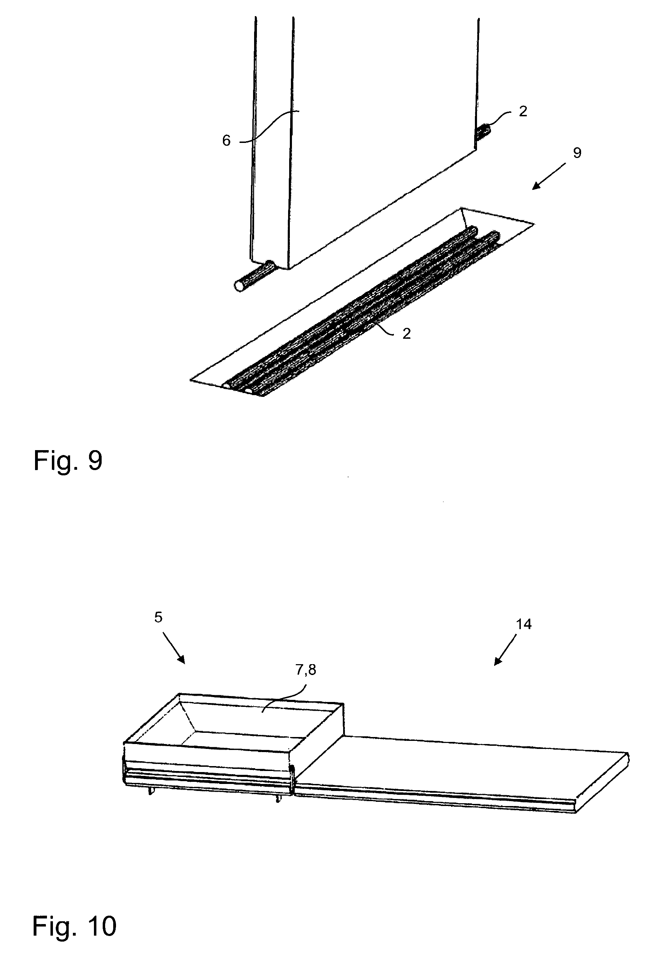

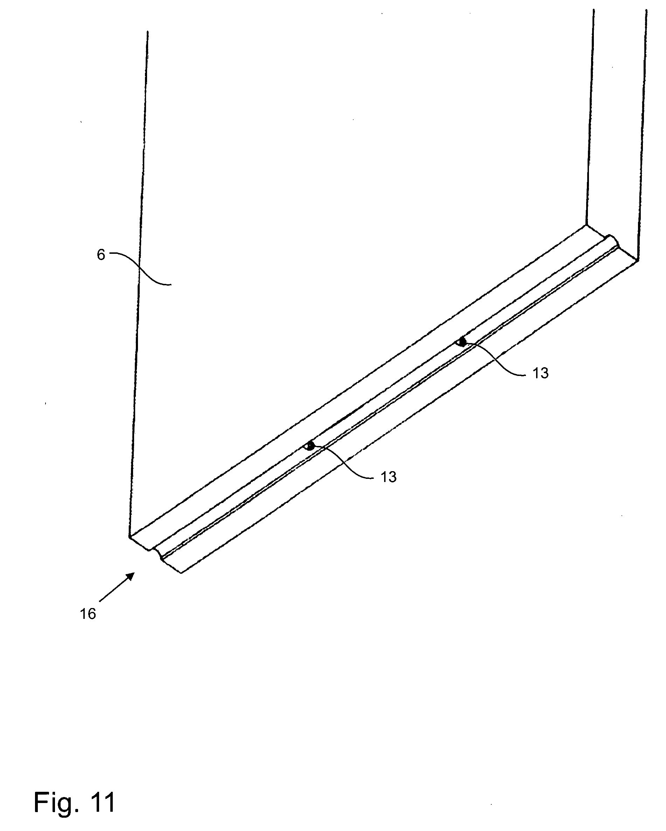

Figur 9 zeigt nunmehr das Ablageelement 6 der Figur 7, nachdem es ein Einlageelement 2 mittels Vakuum aufgenommen hat. In Figur 11 ist eine Innenansicht eines Ablageelementes 6 gezeigt. Deutlich zu erkennen sind dabei zwei Öffnungen 13, an welche hier nicht dargestellte Vakuumleitungen anordenbar sind. Die Öffnungen 3 befinden sich dabei in einer Rille 16, die zur Aufnahme eines als Nadel ausgebildeten Einlegeteils 2 dient, sodass sie während des Transports der Einlegeteile durch diese verschlossen sind.

Figur 10 zeigt die Beförderungseinrichtung 5 nochmals in einer Detaildarstellung wobei hier deutlich auch das Schienensystem 14 zu erkennen ist, auf welchem die Beförderungseinrichtung zwischen der Entlade- und Ladeposition hin und her verfahrbar ist. Deutlich zu erkennen ist hierbei auch nochmals die Entnahmevorrichtung 7, die vorliegend als Auffangbehälter 8 ausgebildet ist.

### Bezugszeichenliste

- 1: Kunststoffteil
- 2: Einlegeteil
- 3: erste Werkzeughälfte
- 4: zweite Werkzeughälfte
- 5: Beförderungseinrichtung
- 6: Ablageelement
- 7: Entnahmeelement
- 8: Auffangbehälter
- 9: Magazin
- 10: Kippgeometrie
- 11: Kavität
- 12: Ablagegeometrie
- 13: Öffnungen
- 14: Schienensystem
- 15: Gestell
- 16: Rille

## Patentansprüche

1. Vorrichtung zur Herstellung von Kunststoffteilen (1) mit Einlegeteilen (2) in einem Spritzgießverfahren, wobei eine erste Werkzeughälfte (3) und eine zweite Werkzeughälfte (4) sowie eine Beförderungseinrichtung (5) vorgesehen sind,
**dadurch gekennzeichnet, dass**
die Beförderungseinrichtung (5) wenigstens ein Ablageelement (6) zur Ablage eines Einlegeteils (2) in der ersten Werkzeughälfte (3) und wenigstens ein Entnahmeelement (7) zur Entnahme eines fertigen Kunststoffteils (1) mit Einlegeteil (2) aus der zweiten Werkzeughälfte (4) aufweist, wobei durch die Beförderungseinrichtung (5) eine Entladeposition einnehmbar ist, in welcher in einem Beförderungsschritt durch das wenigstens eine Ablageelement (6) ein Einlegeteil (2) in der ersten Werkzeughälfte (3) zum Umspritzen mit Kunststoff ablegbar ist und parallel dazu durch das wenigstens eine Entnahmeelement (7) wenigstens ein fertiges Kunststoffteil (1) mit Einlegeteilen (2) aus der zweiten Werkzeughälfte (4) entnehmbar ist" wobei die erste Werkzeughälfte (3) eine Ablagegeometrie (12) aufweist, welche ein darin abgelegtes Einlegeteil (2) selbsttätig aufgrund seines Gewichtes und seiner Schwerkraft in eine Bearbeitungsposition überführt..

2. Vorrichtung nach Anspruch 1,
**dadurch gekennzeichnet, dass**
das wenigstens eine Ablageelement (6) zur Ablage eines Einlegeteils (2) in der ersten Werkzeughälfte (3) als Greifelement ausgebildet ist.

3. Vorrichtung nach Anspruch 1 oder 2,
**dadurch gekennzeichnet, dass**
das wenigstens eine Entnahmeelement (7) zur Entnahme eines fertigen Kunststoffteils (1) mit Einlegeteil (2) aus der zweiten Werkzeughälfte (4) als Greifelement ausgebildet ist.

4. Vorrichtung nach Anspruch 2 oder 3,
**dadurch gekennzeichnet, dass**
das Greifelement als Vakuumgreifelement ausgebildet ist.

5. Vorrichtung nach Anspruch 1 oder 2,
**dadurch gekennzeichnet, dass**
das wenigstens eine Entnahmeelement (7) zur Entnahme eines fertigen Kunststoffteils (1) mit Einlegeteil (2) aus der zweiten Werkzeughälfte (4) als Auffangbehälter (8) ausgebildet ist.

6. Vorrichtung nach einem der Ansprüche 1 bis 5,
**dadurch gekennzeichnet, dass**
durch die Beförderungseinrichtung (5) eine Ladeposition einnehmbar ist, in welcher das wenigstens eine Ablageelement (6) ein Einlegeteil (2) aus einem Magazin (9) mit einer Mehrzahl von Einlageteilen (2) entnimmt und das wenigstens eine Entnahmeelement (7) wenigstens ein fertiges Kunststoffteil (1) mit Einlegeteil (2) in einem Behältnis ablegt.

7. Vorrichtung nach einem der Ansprüche 1 oder 5,
**dadurch gekennzeichnet, dass**
die Beförderungseinrichtung (5) zwischen der Ladeposition und der Entladeposition hin und her verfahrbar ist.

8. Vorrichtung nach einem der Ansprüche vorhergehenden Ansprüche
**dadurch gekennzeichnet, dass**
der Auffangbehälter (8) beim Einfahren der Beförderungseinrichtung in die Ladepostion durch eine Kippgeometrie (10) selbsttätig gekippt wird, sodass die darin enthaltenen fertigen Kunststoffteile (1) mit Einlegeteilen (2) in ein Behältnis auskippbar und dort sammelbar sind.

## Claims

1. Device for the production of plastics parts (1) with inserts (2) in an injection molding method, a first mold half (3) and a second mold half (4) and a conveying device (5) being provided, **characterised in that** the conveying device (5) comprises at least one placing element (6) for placing an insert (2) in the first mold half (3) and at least one removal element (7) for removing a finished plastics part (1) comprising the insert (2) from the second mold half (4), it being possible for the conveying device (5) to occupy an unloading position in which, in a conveying step, the at least one placing element (6) can place an insert (2) in the first mold half (3) for injection molding using a plastics material and it being possible, at the same time, for at least one finished plastics component (1) comprising inserts (2) to be removed from the second mold half (4) by the at least one removal element (7), the first mold half (3) having a placement geometry (12) which automatically transfers an insert (2) placed therein into a processing position on account of the weight and gravitational force of said insert.

2. Device according to claim 1, **characterised in that** the at least one placing element (6) for placing an insert (2) in the first mold half (3) is formed as a gripping element.

3. Device according to either claim 1 or claim 2, **characterised in that** the at least one removal element (7) for removing a finished plastics part (1) compring an insert (2) from the second mold half (4) is formed as a gripping element.

4. Device according to either claim 2 or claim 3, **characterised in that** the gripping element is formed as a vacuum gripping element.

5. Device according to either claim 1 or claim 2, **characterised in that** the at least one removal element (7) for removing a finished plastics part (1) comprising an insert (2) from the second mold half (4) is formed as a collecting container (8).

6. Device according to any of claims 1 to 5, **characterised in that** the conveying device (5) can occupy a loading position in which the at least one placing element (6) removes an insert (2) from a magazine (9) comprising a plurality of inserts (2), and the at least one removal element (7) places at least one finished plastics part (1) comprising an insert (2) in a container.

7. Device according to any of claims 1 to 5, **characterised in that** the conveying device (5) can be moved back and forth between the loading position and the unloading position.

8. Device according to any of the preceding claims, **characterised in that** the collecting container (8) is automatically tipped by means of a tipping geometry (10) when the conveying device enters the loading postion, such that the finished plastics parts (1) which are contained therein and comprise inserts (2) can be emptied into a container and collected therein.

## Revendications

1. Dispositif de fabrication de pièces en matière plastique (1) ayant des inserts (2) dans un procédé de moulage par injection, une première moitié d'outil (3) et une deuxième moitié d'outil (4) ainsi qu'un dispositif de convoyage (5) étant prévus,
**caractérisé en ce que**
le dispositif de convoyage (5) comprend au moins un élément de pose (6) pour la pose d'un insert (2) dans la première moitié d'outil (3) et au moins un élément de retrait (7) pour le retrait d'une pièce en matière plastique finie (1) avec insert (2) hors de la deuxième moitié d'outil (4), le dispositif de convoyage (5) pouvant adopter une position de déchargement dans laquelle, dans une étape de convoyage, l'élément de pose (6) permet de poser un insert (2) dans la première moitié d'outil (3) pour un surmoulage avec une matière plastique et, parallèlement à celle-là, l'au moins un élément de retrait (7) permet de retirer au moins une pièce en matière plastique finie (1) avec insert (2) hors de la deuxième moitié (4), la première moitié d'outil (3) compartant une géométrie de pose (12) qui permet de placer automatiquement un insert (2) posé à l'intérieur dans une position de traitement du fait de son poids et de la gravité.

2. Dispositif selon la revendication 1,
**caractérisé en ce que**
l'au moins un élément de pose (6) est conçu pour la pose d'un insert (2) dans la première moitié d'outil (3) en tant qu'élément de préhension.

3. Dispositif selon la revendication 1 ou 2,
**caractérisé en ce que**
l'au moins un élément de retrait (7) est conçu pour le retrait d'une pièce de matière plastique finie (1) avec insert (2) hors de la deuxième moitié d'outil (4) en tant qu'élément de préhension.

4. Dispositif selon la revendication 2 ou 3,
**caractérisé en ce que**
l'élément de préhension est conçu comme un élément de préhension à vide.

5. Dispositif selon la revendication 1 ou 2,
**caractérisé en ce que**
l'au moins un élément de retrait (7) est conçu pour le retrait d'une pièce de matière plastique finie (1) avec insert (2) hors de la deuxième moitié d'outil (4) en tant que récipient de collecte (8).

6. Dispositif selon l'une des revendications 1 à 5,
**caractérisé en ce que**
le dispositif de convoyage (5) peut adopter une position de chargement dans laquelle l'au moins un élément de pose (6) retire un insert (2) d'un magasin (9) contenant une pluralité d'inserts (2) et l'au moins un élément de retrait (7) pose au moins une pièce de matière plastique finie (1) avec insert (2) dans un récipient.

7. Dispositif selon l'une des revendications 1 à 5,
**caractérisé en ce que**
le dispositif de convoyage (5) peut être déplacé entre la position de chargement et la position de déchargement et inversement.

8. Dispositif selon l'une des revendications précédentes,
**caractérisé en ce que**
le récipient de collecte (8) est automatique basculé lors du déplacement du dispositif de convoyage vers la position de chargement grâce à une géométrie de basculement (10), de façon à ce que les pièces en matière pastique (1) avec inserts (2) qui y sont contenues puissent être basculées dans un récipient et y être accumulées.
